**Europäisches Patentamt**

**European Patent Office**

**Office européen des brevets**

(19)

(11) Veröffentlichungsnummer: **0 108 334**
**B1**

# EUROPÄISCHE PATENTSCHRIFT

(45) Veröffentlichungstag der Patentschrift:
12.07.89

(51) Int. Cl.⁴: **F 16 B  35/04,** F 16 B  13/12

(21) Anmeldenummer: **83110646.3**

(22) Anmeldetag: **25.10.83**

(54) Schraube für Kunststoff-Spreizdübel.

(30) Priorität: **28.10.82  DE 3240050**

(73) Patentinhaber: **HILTI Aktiengesellschaft, FL- 9494 Schaan (LI)**

(43) Veröffentlichungstag der Anmeldung:
**16.05.84 Patentblatt 84/20**

(72) Erfinder: **Bisping, Heinz, Feichtmayrstrasse 15, D-8000 München 50 (DE)**

(45) Bekanntmachung des Hinweises auf die Patenterteilung:
**12.07.89 Patentblatt 89/28**

(84) Benannte Vertragsstaaten:
**CH FR GB LI SE**

(56) Entgegenhaltungen:
**EP-A-0 053 467**
**FR-A-1 217 700**
**FR-A-1 323 285**

## Beschreibung

Die Erfindung betrifft eine Schraube, insbesondere zur Verwendung als Spreizelement in Kunststoffdübeln, mit einem Kopf und einem eine Spitze aufweisenden Schaftteil, das wenigstens über einen Teil seiner Länge mit Gewindegängen versehen ist, deren Aussendurchmesser entlang dem ganzen Gewindebereich im wesentlichen konstant ist; vgl. FR-A-1 217 700, Fig. 13.

Bisher werden bei Kunststoff-Spreizdübeln meist sogenannte Holzschrauben als Spreizelement verwendet. Diese Holzschrauben bestehen aus Metall und ihr Gewinde unterscheidet sich gegenüber demjenigen von zusammen mit Muttern zu verwendenden Metallschrauben durch eine etwas grössere Steigung sowie durch das Profil, bei dem die Zwischenräume zwischen den einzelnen Gewindegängen grösser sind als der Querschnitt der Gewindegänge. Ein weiterer Unterschied besteht darin, dass die meisten Holzschrauben mit einer Spitze versehen sind und ausserdem einen über den gesamten Gewindebereich gleichbleibenden oder sich gegen vorne verjüngenden Kernquerschnitt aufweisen. Die Höhe der Gewindegänge ist jeweils konstant, so dass deren Aussendurchmesser entsprechend dem Kernquerschnitt ebenfalls im wesentlichen gleich bleibt oder gegen vorne hin abnimmt.

Beim Einschrauben einer solchen Holzschraube in einen Kunststoff-Spreizdübel wird dieser im rückwärtigen Bereich stärker gespreizt als im vorderen Bereich. Eine solche Verteilung des Spreizdruckes ist jedoch ungünstig, da es an der Oberfläche des Aufnahmematerials zu Ausplatzungen kommen kann.

Speziell für Kunststoffdübel ist eine Schraube bekannt, die zwei Gewindebereiche mit unterschiedlichem Aussendurchmesser aufweist. Dabei ist der rückwärtige Gewindebereich kleiner als der vordere, in eine Spitze übergehende Gewindebereich. Aufgrund der konstanten Höhe der Gewindegänge verändert sich neben dem Kerndurchmesser auch der Aussendurchmesser des Gewindes. Der Spreizdruck wird damit im Bereich des grösseren Kerndurchmessers wesentlich erhöht. Da die Gewindegänge im Bereich des grösseren Kerndurchmessers im wesentlichen das gleiche Profil aufweisen wie im Bereich des kleineren Kerndurchmessers, kommt es im Bereich der Gewindegänge zu sehr hohen Spitzendrücken, welche zu grosser plastischer Verformung des Kunststoff-Spreizdübels und damit zu einer deutlichen Verschlechterung der Langzeit-Haltewerte führen können.

Der Erfindung liegt die Aufgabe zugrunde, eine Schraube für Kunststoff-Spreizdübel zu schaffen, welche eine günstige Verteilung des Spreizdruckes ermöglicht.

Gemäss der Erfindung wird dies dadurch erreicht, dass der Kernquerschnitt des Gewindebereiches wenigstens teilweise gegen das vordere, dem Kopf abgewandte Ende hin erweitert ausgebildet ist.

Durch die erfindungsgemässe Ausbildung ist der Kernquerschnitt des Gewindebereiches am rückwärtigen Ende am kleinsten und nimmt gegen das vordere, spitzenseitige Ende hin zu. Da der Aussendurchmesser des Gewindebereiches jedoch im wesentlichen konstant ist, nimmt die Höhe der Gewindegänge gegen das vordere Ende hin gleichzeitig ab. Durch den sich gegen das vordere Ende hin erweiternden Kernquerschnitt des Gewindebereiches nimmt der Spreizdruck gegen das vordere Ende des Spreizdübels hin zu. Da jedoch gleichzeitig die Höhe der Gewindegänge - aus der Sicht des Kernquersschnittes betrachtet - gegen das vordere Ende hin abnimmt, werden die Druckspitzen im Bereich der Gewindeflanken reduziert. Insgesamt ist somit die Druckverteilung im Spreizbereich gleichmässiger. Beim Einschrauben der Schraube in einen Spreizdübel wird der Spreizdruck im Bereich des grössten Kernquerschnittes zunächst erhöht. Nach dem Passieren dieses Gewindebereiches kann sich der Spreizdübel infolge seiner Elastizität wieder teilweise entspannen. Der vorher erzeugte Spreizdruck kann daher wieder teilweise abgebaut werden. Die erfindungsgemässe Ausbildung der Schraube ermöglicht eine Reduzierung des Eindrehmomentes bei mindestens gleichen Haltewerten.

Je nach Länge des Gewindebereiches, Art des Kunststoffes des Spreizdübels sowie einiger weiterer Faktoren kann die Erweiterung des Kerndurchmessers mehr oder weniger gross sein. Im Mittel hat es sich als zweckmässig erwiesen, dass der grösste Kerndurchmesser das 1,2- bis 1,8-fache des kleinsten Kerndurchmessers des Gewindebereiches beträgt. Bei zu starker Erweiterung des Kernquerschnittes erfolgt eine plastische Verformung des Kunststoff-Spreizdübels, so dass ein Zurückfedern nicht mehr möglich ist. Eine zu geringe Erweiterung des Kernquerschnittes ist praktisch wirkungslos.

Die Erweiterung des Kernquerschnittes des Gewindebereiches kann an unterschiedlichen Stellen des Gewindebereiches angeordnet werden. Für eine günstige Verteilung des Spreizdruckes ist es jedoch vorteilhaft, dass sich der grösste Kernquerschnitt des Gewindebereiches zum Kopf hin gesehen an die Spitze anschliesst. Durch diese Anordnung erfolgt die Erzeugung des grössten Spreizdruckes im Bereich des Bohrlochtiefsten. Vom Bereich des grössten Spreizdruckes nimmt dieser nach hinten, dh gegen die Aussenseite des Aufnahmematerials hin, ab.

Der Kernquerschnitt des Gewindes kann über den gesamten Gewindebereich sich erweiternd ausgebildet werden. Dadurch entsteht jedoch wiederum an einer Stelle ein Spitzendruck. Um eine Überbelastung des Kunststoff-Spreizdübels zu vermeiden, ist es zweckmässig, dass sich an die Spitze ein sich über das 1- bis 5-fache der Gewindesteigung erstreckender Bereich mit konstantem, dem grössten Kerndurchmesser entsprechendem Durchmesser anschliesst. Durch einen solchen zylindrischen Bereich des Gewindekerns wird der höchste Spreizdruck über einige Gewindegänge verteilt.

Die Erfindung soll nachstehend anhand der sie beispielsweise wiedergebenden Zeichnungen näher erläuter werden. Es zeigen:

Fig. 1 Eine erfindungsgemässe Spreizschraube,

Fig. 2 eine Befestigung eines Bauteiles mittels eines Spreizdübels und einer erfindungsgemässen Spreizschraube gemäss Fig. 1.

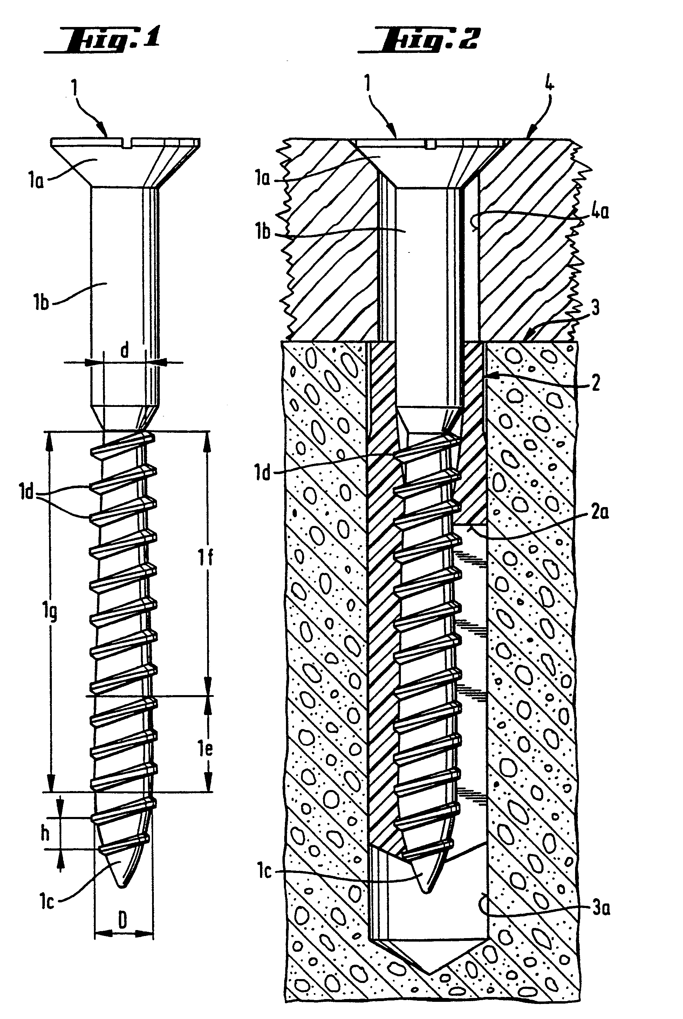

Die aus den Figuren 1 und 2 ersichtliche, insgesamt mit 1 bezeichnete Schraube weist einen Kopf 1a sowie ein daran anschliessendes Schaftteil 1b auf. Das vordere Ende des Schaftteils 1b ist als Spitze 1c ausgebildet. Das Schaftteil 1b ist über einen Teil seiner Länge mit Gewindegängen 1d versehen. Der Kern des Gewindebereiches 1g besteht aus einem zylindrischen Bereich 1e und einem konischen Bereich 1f. Der kleinste Kerndurchmesser d befindet sich am rückwärtigen Ende des Gewindebereiches 1g und der grösste Kerndurchmesser D in dem an die Spitze 1c anschliessenden zylindrischen Bereich 1e. Im konischen Bereich 1f erweitert sich der Kerndurchmesser von d auf D. Die Länge des zylindrischen Bereiches 1e beträgt etwa das 3-fache der Steigung h der Gewindegänge 1d. Der Kern des Gewindebereiches 1g weist somit etwa Keulenform auf. Da der Aussendurchmesser der Gewindegänge 1d über den gesamten Gewindebereich 1g etwa gleich bleibt, nimmt die Höhe der Gewindegänge gegen das vordere Ende hin ab.

Durch diese Ausbildung wird verhindert, dass der Spreizdübel durch die den Kunststoff verdrängenden Gewindegänge 1g beschädigt wird.

Fig. 2 zeigt die in einen insgesamt mit 2 bezeichneten Spreizdübel eingeschraubte Schraube 1. Der Spreizdübel 2 ist in ein insgesamt mit 3 bezeichnetes Aufnahmematerial eingesetzt. Der Spreizdübel 2 weist zur besseren Aufweitung wenigstens einen Längsschlitz 2a auf und entspricht in seinem Aussendurchmesser im wesentlichen demjenigen einer Aufnahmebohrung 3a im Aufnahmematerial 3. Mittels der Schraube 1 wird ein insgesamt mit 4 bezeichnetes Bauteil am Aufnahmematerial 3 befestigt. Das Bauteil 4 weist zu diesem Zweck eine Durchgangsbohrung 4a auf, deren Durchmesser etwa zwischen dem Aussendurchmesser des Schaftteiles 1b der Schraube 1 und dem Durchmesser der Aufnahmebohrung 3a liegt.

## Patentansprüche

1. Schraube (1), insbesondere zur Verwendung als Spreizelement in Kunststoffdübeln (2), mit einem Kopf (1a) und einem eine Spitze (1c), aufweisenden Schaftteil (1b), das wenigstens über einen Teil seiner Länge mit Gewindegängen (1d), versehen ist, deren Aussendurchmesser entlang dem ganzen Gewindebereich (1g) im wesentlichen konstant ist, dadurch gekennzeichnet, dass der Kernquerschnitt des Gewindebereiches (1g) wenigstens teilweise gegen das vordere, dem Kopf (1a) abgewandte Ende hin erweitert ausgebildet ist.

2. Schraube nach Anspruch 1, dadurch gekennzeichnet, dass der grösste Kerndurchmesser (D) das 1,2- bis 1,8-fache des kleinsten Kerndurchmessers (d) des Gewindebereiches (1g) beträgt.

3. Schraube nach Anspruch 1 oder 2, dadurch gekennzeichnet, dass sich der grösste Kerndurchmesser des Gewindebereiches (1g) zum Kopf (1a) hin gesehen an die Spitze (1c) anschliesst.

4. Schraube nach einem der Ansprüche 1 bis 3, dadurch gekennzeichnet, dass sich an die Spitze (1c) ein sich über das 1- bis 5-fache der Gewindesteigung (h) erstreckender Bereich (1e) mit konstantem, dem grössten Kerndurchmesser (D) entsprechendem Durchmesser anschliesst.

## Claims

1. A screw (1), more especially for use as an expansion element in plastics dowels (2), with a head (1a) and a shaft part (1b) which has a tip (1c) and which is provided at least over a part of its length with thread courses (1d), the outside diameter of which is substantially constant along the entire thread region (1g), characterised in that the core cross-section of the thread region (1g) is designed widened at least partially towards the front end remote from the head (1a).

2. A screw according to claim 1, characterised in that the largest core diameter (D) amounts to 1.2 up to 1.8 times the smallest core diameter (d) of the thread region (1g).

3. A screw according to claim 1 or 2, characterised in that the largest core diameter of the thread region (1g) considered towards the head (1a) is adjacent to the tip (1c).

4. A screw according to one of claims 1 to 3, characterised in that a region (1e) extending over 1 to 5 times the thread pitch (h) and having a constant diameter corresponding to the largest core diameter (D) is adjacent to the tip (1c).

## Revendications

1. Vis (1), en particulier pour l'utilisation en tant qu'élément d'écartement dans des chevilles en matière plastique (2), comprenant une tête (1a) et une section de tige (1b) présentant une pointe (1c) laquelle section de tige est munie, au moins sur une partie de sa longueur, de filets (1d) dont le diamètre extérieur est sensiblement constant le long de toute la partie filetée (1g), caractérisée en ce que le diamètre du noyau de la partie filetée (1g) s'élargit au moins en partie en direction de l'extrémité antérieure opposée à la tête (1a).

2. Vis selon la revendication 1, caractérisée en

ce que le diamètre maximum du noyau (D) est égal à 1,2 à 1,8 fois le diamètre minimum du noyau (d) de la partie filetée (1g).

3. Vis selon l'une des revendications 1 ou 2, caractérisée en ce que, vu en direction de la tête (1a), le diamètre maximum du noyau de la partie filetée (1g) fait suite à la pointe (1c).

4. Vis selon l'une des revendications 1 à 3, caractérisée en ce qu'à la pointe (1c) fait suite une section (1e) qui s'étend sur 1 à 5 fois le pas de vis (h) et présente un diamètre constant correspondant au diamètre maximum (D) du noyau.

# Fig.1

# Fig.2